# EUROPEAN PATENT SPECIFICATION

(11) **EP 2 565 429 B1**
(45) Date of publication and mention of the grant of the patent: **06.01.2016**
(21) Application number: 10850681.7
(22) Date of filing: 26.04.2010
(51) Int. Cl.: B60K 28/16, F02D 29/00, F02D 41/02, B60W 10/06, F02D 11/10, B60W 30/18

(54) **VEHICLE ENGINE CONTROLLER**
STEUERUNG FÜR EINEN FAHRZEUGMOTOR
DISPOSITIF DE COMMANDE DE MOTEUR DE VÉHICULE

(43) Date of publication of application: 06.03.2013
(73) Proprietor: TOYOTA JIDOSHA KABUSHIKI KAISHA, Toyota-shi, Aichi-ken, 471-8571 (JP)
(72) Inventor: OTSUBO Masaaki, Toyota-shi, Aichi-ken 471-8571 (JP)
(74) Representative: TBK
(86) International application number: PCT/JP2010/057396
(87) International publication number: WO 2011/135662

(56) References cited:
- JP-A- 5 280 387
- JP-A- 2008 121 595
- US-A1- 2004 211 609
- US-A1- 2006 014 609
- US-A1- 2009 132 141

## Description

### TECHNICAL FIELD

The present invention relates to a control device of a vehicle engine and, more particularly, to an improvement for enhancing the start-up performance in a situation where a vehicle is difficult to start.

### BACKGROUND ART

In a vehicle having a manual transmission that selectively establishes a plurality of shift stages by manually operating a shift lever, etc., a clutch is disposed between the manual transmission and an engine to control transmission of a driving force from the engine to the manual transmission depending on the state of engagement of the clutch. Such a vehicle involves a problem that an engine stall is liable to occur on starting in a case where the vehicle running road surface is an upward slope, i.e., on upward slope starting, and a technique for solving the problem is proposed. One example thereof is an engine control device described in JP 2006-233911 A.

Furthermore, a control device according to the preamble of claim 1 is known from US 2009/132 141 A1. Further control devices are disclosed in US 2004/211 609 A1 and US 2006/014 609 A1.

### SUMMARY OF THE INVENTION

### Problem to Be Solved by the Invention

The prior art however has entailed a limitation in enhancing the start-up performance since precise acceleration operation and clutch operation are required in the situation where the vehicle is difficult to start, as on low µ road starting, i.e., on vehicle starting in a case where the running road surface has a relatively low friction coefficient. For this reason, development has been required of a control device of a vehicle engine enhancing the start-up performance in the situation where the vehicle is difficult to start.

The present invention was conceived in view of the above circumstances and an object thereof is to provide a control device of a vehicle engine enhancing the start-up performance in the situation where the vehicle is difficult to start.

### Means for Solving the Problems

To achieve the object, the present invention provides a control device of a vehicle engine in a vehicle having a clutch that interrupts or transmits a driving force output from an engine by a driver's operation, and that is disposed in a power transmitting path between the engine and a transmission, the control device controlling the driving force output from the engine based on operation amount of an accelerator pedal, the control device comprising: a start-up difficulty determining means that determines that the vehicle is difficult to start when a specified number of times or more of driver's operations of the clutch relating to interruption or transmission are executed in a predefined specified time; and an output control means that, when it is determined by the start-up difficulty determining means that the vehicle is difficult to start, reduces the driving force output from the engine depending on the operation amount of the accelerator pedal compared to the case when it is not determined by the start-up difficulty determining means, that the vehicle is difficult to start. The Effects of the Invention

Consequently, it is provided with the start-up difficulty determining means that determines whether the vehicle is difficult to start based on the frequency of driver's operations of the clutch relating to the interruption or transmission and with the output control means that, if it is determined by the start-up difficulty determining means that the vehicle is difficult to start, reduces the driving force output from the engine depending on the operation amount of the accelerator pedal than when not determined, whereby a preferred vehicle start-up can be implemented without needing precise accelerator operations and clutch operations e.g., even when the running road surface has a relatively low friction coefficient with a small transmittable torque. That is, a control device of a vehicle engine can be provided that enhances the start-up performance in a situation where the vehicle is difficult to start.

The start-up difficulty determining means determines that the vehicle is difficult to start when a specified number of times or more of driver's operations of the clutch relating to interruption or transmission are executed in a predefined specified time. Consequently, it can be determined in a practically useful manner whether the vehicle is difficult to start.

Preferably, a speed difference calculating means that calculates a difference between a wheel speed and a vehicle body speed is disposed, if the difference between the wheel speed and the vehicle body speed calculated by the speed difference calculating means is not less than a predefined threshold value, the start-up difficulty determining means changes at least one of the specified time and the specified number of times to a smaller value. Consequently, it can be determined in a more practically useful manner whether the vehicle is difficult to start.

Preferably, the output control means executes a control reducing the driving force output from the engine depending on the operation amount of the accelerator pedal when an operation of releasing the accelerator pedal is being carried out, whereas the output control means does not execute the control when an operation of depressing the accelerator pedal is being carried out. Consequently, the acceleration characteristics can be restrained from varying in the process of depressing the accelerator pedal.

### BRIEF DESCRIPTION OF THE DRAWINGS

Fig. 1 is a block diagram schematically explaining a configuration of a drive device of a vehicle to which the present invention is advantageously applied.
Fig. 2 is a diagram explaining a configuration of the clutch provided on the vehicle of Fig. 1 and a clutch pedal disposed in a vehicle compartment for actuating the clutch.
Fig. 3 is a function block diagram depicting a main part of a function of controlling the drive of the engine by the electronic control device provided on the vehicle of Fig. 1.
Fig. 4 is a diagram exemplifying a relationship between the accelerator operation amount and an engine output target value, for use in the control in the present embodiment by the electronic control device provided on the vehicle of Fig. 1.
Fig. 5 is a flowchart explaining a main part of engine output control on starting by the electronic control device provided on the vehicle of the Fig. 1.

### MODE FOR CARRYING OUT THE INVENTION

A preferred embodiment of the present invention will now be described in detail with reference to the drawings.

### Embodiment

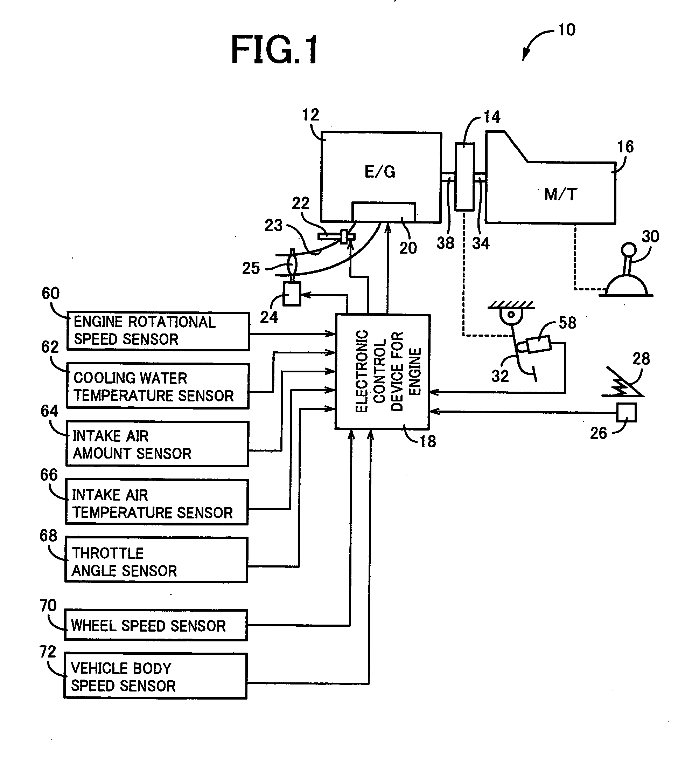

Fig. 1 is a block diagram schematically explaining a configuration of a drive device of a vehicle 10 to which the present invention is advantageously applied. The drive device includes a clutch 14 that, by a driver's operation, interrupts or transmits a driving force output from an engine 12 as a driving force source to a power transmission line between the engine 12 and a transmission 16, with the driving force (torque) generated by the engine 12 being transmitted to driving wheels via the clutch 14, the transmission 16, a differential gear device not depicted, etc. The vehicle 10 is provided with an electronic control device 18 for controlling the drive of the engine 12.

The engine 12 is an internal combustion engine such as a gasoline engine that generate a driving force by the combustion of fuel such as gasoline, etc. injected into a cylinder and includes a fuel injector 20 and an igniter 22. In the interior of an intake piping 23 of the engine 12 is disposed an electronic throttle valve 25 whose opening/closing is controlled by a throttle actuator 24. The amount of fuel injection from the fuel injector 20, the timing of ignition by the igniter 22, and a throttle angle θ_{TH} of the electronic throttle valve 25 are basically controlled by the electronic control device 18 so as to become values corresponding to an accelerator opening A_{cc}, i.e., the amount of operation (the amount of depression) of an accelerator pedal 28 detected by an accelerator operation amount sensor 26.

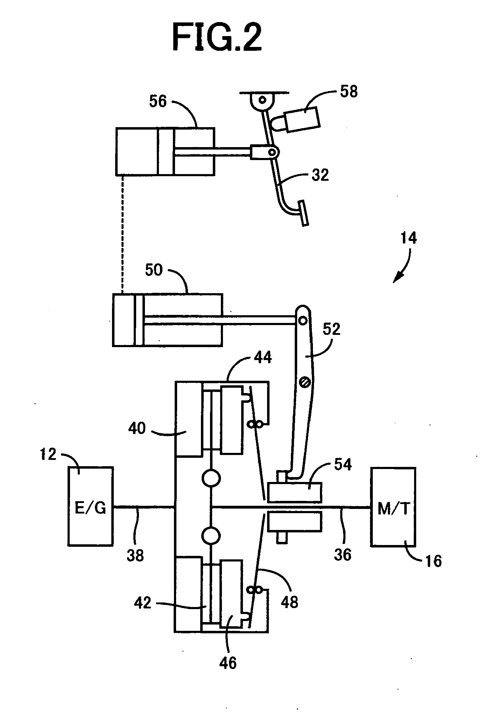

The transmission 16 is a device that reduces or increases the input rotation speed at a predetermined shift ratio γ for the output thereof and is for example a synchromesh manual transmission whose shift stage is changed over by the driver's manual operation. Specifically, one of a plurality of synchromesh devices is selectively engaged or released by operating a shift lever 30 so that one of five forward stages, one backward stage, and neutral for example is established to achieve a speed conversion depending on the respective shift ratios γ. An input shaft 34 of the transmission 16 is coupled by spline fitting to a clutch output shaft 36 (see Fig. 2) of the clutch 14.

Fig. 2 is a diagram explaining a configuration of the clutch 14 and a clutch pedal 32 disposed in a vehicle compartment for actuating the clutch 14. As depicted in Fig. 2, the clutch 14 includes a flywheel 40 fitted to a crankshaft 38 of the engine 12; a clutch disc 42 disposed on the clutch output shaft 36; a pressure plate 46 disposed in a clutch housing 44; a diaphragm spring 48 urging the pressure plate 46 toward the flywheel 40 to clamp the clutch disc 42 for engagement of the clutch 14; and a release sleeve 54 that is moved leftward in the diagram by a clutch release cylinder 50 via a release fork 52 to displace the inner end of the diaphragm spring 48 leftward in the diagram for release (disengagement) of the clutch 14. The clutch release cylinder 50 connects to a clutch master cylinder 56 that is coupled to the clutch pedal 32 to be activated by the operation thereof.

The thus configured clutch 14 is in its engaged state at ordinary time, i.e., when the clutch pedal 32 is not depressed, whereas it is put in its slipping state or released state by depressing the clutch pedal 32. The clutch pedal 32 has a clutch operation sensor 58 fixedly positioned thereon for detecting the operation or the amount of operation (the amount of depression) by the driver of the clutch pedal 32 relating to the interruption or transmission. The clutch operation sensor 58 is for example a switch that detects whether the clutch pedal 32 is depressed by the driver or a stroke sensor that detects the amount of depression of the clutch pedal 32.

Referring back to Fig. 1, the electronic control device 18 includes a so-called microcomputer consisting of a CPU, a ROM, a RAM, an I/O interface, etc. and executes signal processing in accordance with a program previously stored in the ROM while making use of a temporary storage function of the RAM. For example, the electronic control device 18 controls the amount of fuel injection to the engine 12 via the fuel injector 20, controls the fuel ignition timing of the engine 12 via the igniter 22, and controls the throttle angle θ_{TH} of the electronic throttle valve 25 via the throttle actuator 24, to thereby control the driving force output from the engine 12.

The vehicle 10 is provided with various sensors such as: an engine rotational speed sensor 60 that detects an actual rotational speed N_{E} of the engine 12; a cooling water temperature sensor 62 that detects a temperature T_{w} of cooling water; an intake air amount sensor 64 that detects an intake air amount Q; an intake air temperature sensor 66 that detects an intake air temperature T_{A}; a throttle angle sensor 68 that detects an actual throttle angle θ_{TH} of the electronic throttle valve 25; a wheel speed sensor 70 that detects a wheel speed V_{WH}, i.e., an actual rotational speed of each of a plurality of wheels of the vehicle 10; and a vehicle body speed sensor 72 that detects a vehicle speed V, i.e., an actual speed of the body of the vehicle 10 (a vehicle body speed); the sensors feeding to the electronic control device 18 their respective signals, a signal indicative of the engine rotational speed N_{E}, a signal indicative of the cooling water temperature T_{W}, a signal indicative of the intake air amount Q, a signal indicative of the intake air temperature T_{A,} a signal indicative of the throttle angle θ_{TH}, a signal indicative of the wheel speed V_{WH} of each wheel, and a signal indicative of the vehicle speed V. The wheel speed sensor 70 is preferably disposed corresponding to each of the plurality of wheels of the vehicle 10 to individually detect their respective rotational speeds of the wheels but may be disposed corresponding to only the wheels acting as driving wheels. The vehicle body speed sensor 72 preferably detects as the vehicle body speed V a running speed of the vehicle body corresponding to the wheel speed of non-driving wheels among the plurality of wheels of the vehicle 10 and, if the wheel speed sensor 70 is disposed corresponding to all of the wheels, the wheel speed sensor 70 may be used as the vehicle body speed sensor 72.

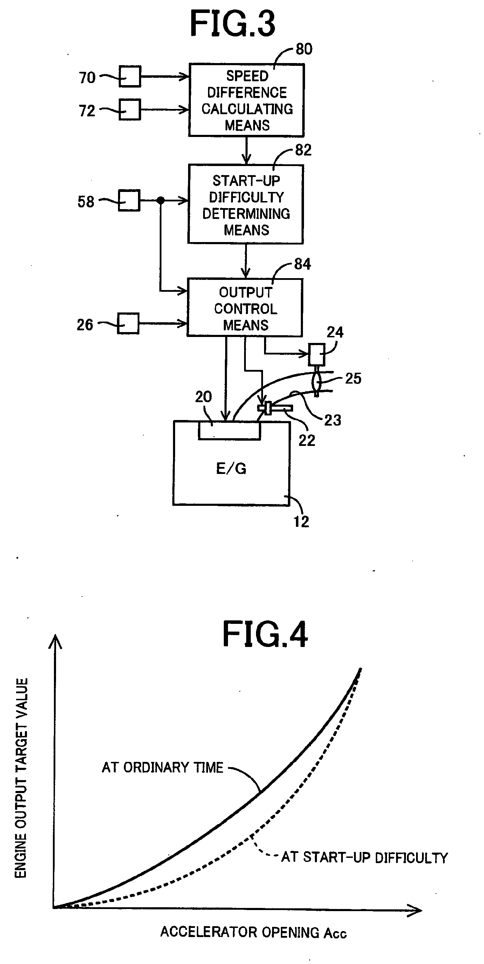

Fig. 3 is a function block diagram depicting a main part of a function of controlling the drive of the engine 12 by the electronic control device 18. A speed difference calculating means 80 depicted in Fig. 3 calculates a speed difference ΔV(=V_{WH}-V) between the wheel speed V_{WH} detected by the wheel speed sensor 70 and the vehicle body speed V detected by the vehicle body speed sensor 72. Preferably, the speed difference calculating means 80 calculates a mean (average) value of wheel speeds V_{WH} corresponding to the wheels detected by the wheel speed sensors 70, to calculate the speed difference ΔV between the mean value and the vehicle body speed V detected by the vehicle body speed sensor 72. Alternatively, the speed difference calculating means 80 may calculate the speed difference ΔV between the wheel speed V_{WH} corresponding to a wheel having a maximum speed among the wheel speeds V_{WH} corresponding to the wheels detected by the wheel speed sensors 70 and the vehicle body speed V detected by the vehicle body speed sensor 72. In the configuration where the wheel speed sensors 70 are disposed corresponding to only the driving wheels, the speed difference calculating means 80 may find a mean value of the respective wheel speeds V_{WH} of the pair of driving wheels detected by the wheel speed sensors 70, to calculate the speed difference ΔV between the mean value and the vehicle body speed V detected by the vehicle body speed sensor 72.

A start-up difficulty determining means 82 determines whether the vehicle is difficult to start based on the frequency of driver's operations of the clutch 14 relating to the interruption or transmission. The driver's operation of the clutch 14 relating to the interruption or transmission corresponds to e.g. an operation of depressing the clutch pedal 32 for changing over the clutch 14 from the engaged state or an operation of releasing the clutch pedal 32 for changing over the clutch 14 from the disengaged state to the engaged state. The frequency of operations refers to e.g. the number of times of depression or the number of times of release of the clutch pedal 32 in a predetermined time. In a case where the clutch operation sensor 58 is a stroke sensor capable of detecting the amount of depression of the clutch pedal 32, the start-up difficulty determining means 82 may determine the frequency of operations based on the number of times of reciprocation of the clutch pedal 32 reciprocating around substantially the same depression position (around a so-called half-clutch point where the clutch 14 is in slip engagement). That is, the start-up difficulty determining means 82 preferably determines whether the vehicle is difficult to start based on the frequency of depressing operations and releasing operations of the clutch pedal 32. For example, the start-up difficulty determining means 82 determines that the vehicle is difficult to start if the clutch operation sensor 58 detects a specified number of times B (e.g. two) or more of depressing operations (or releasing operations) of the clutch pedal 32 in a predefined specified time A (e.g. 10 sec) .

The start-up difficulty determining means 82 preferably changes at least one of the specified time A and the specified number of times B that are criteria for determination of the start-up difficulty determining means 82 to a smaller value if the speed difference ΔV between the wheel speed V_{WH} and the vehicle body speed V calculated by the speed difference calculating means 80 is not less than a predefined threshold value (specified speed difference) ΔV₀. For example, when the speed difference ΔV is not less than the threshold value ΔV₀, the start-up difficulty determining means 82 determines that the vehicle is difficult to start if the clutch operation sensor 58 detects a specified number of times B-b or more of depressing operations (or releasing operations) of the clutch pedal 32 in a predefined specified time A-a. Since a slip is considered to occur on the wheels of the vehicle 10 when the speed difference ΔV is not less than the predefined threshold value ΔV₀, the start-up difficulty determining means 82 can determine more quickly that the vehicle is difficult to start by changing the specified time A and the specified number of times B to smaller values.

An output control means 84 controls a driving force output from the engine 12 depending on the operation amount of the accelerator pedal 28, i.e., the accelerator opening A_{cc} detected by the accelerator operation amount sensor 26. Specifically, the output control means 84 sets a target value of the driving force output from the engine 12 based on the accelerator opening A_{CC} detected by the accelerator operation amount sensor 26 using a predefined relationship and controls the amount of fuel injection by the fuel injector 20, the timing of ignition by the igniter 22, and the throttle angle θ_{TH} of the electronic throttle valve 25 so that the driving force output from the engine 12 arrives at the target value.

If it is determined by the start-up difficulty determining means 82 that the vehicle is difficult to start, the output control means 84 executes the output control of the engine 12 depending on the operation amount of the accelerator pedal 28, i.e., the accelerator opening A_{cc} based on a relationship different from that of the case where it is not determined. Fig. 4 is a diagram exemplifying a relationship between the accelerator operation amount A_{cc} and an engine output target value, for use in the control of the output control means 84, with a solid line representing a relationship that is used at ordinary time, i. e., when it is not determined by the start-up difficulty determining means 82 that the vehicle is difficult to start and a broken line representing a relationship that is used in start-up difficulty, i.e., when it is determined by the start-up difficulty determining means 82 that the vehicle is difficult to start. In the example of Fig. 4, the relationship used in start-up difficulty has a lower engine output target value defined corresponding to the accelerator operation amount A_{cc} than that of the relationship used at ordinary time so that the engine output (output torque) becomes smaller in start-up difficulty than at ordinary time for the same accelerator operations. That is, if it is determined by the start-up difficulty determining means 82 that the vehicle is difficult to start, the output control means 84 executes an engine output control for reducing, than when not determined, the driving force output from the engine 12 depending on the operation amount of the accelerator pedal 28, i.e., the accelerator opening A_{cc}.

Preferably, when an operation of releasing the accelerator pedal 28 is being carried out, the output control means 84 executes a control for reducing the driving force output from the engine 12 depending on the operation amount of the accelerator pedal 28, i.e., the accelerator opening A_{CC}, whereas it does not execute such a control when an operation of depressing the accelerator pedal 28 is being carried out. The operation of releasing the accelerator pedal 28 is determined based on the accelerator opening A_{CC} detected by the accelerator operation amount sensor 26 such that the operation of releasing the accelerator pedal 28 is determined to be carried out if the accelerator opening A_{CC} is less than a certain value or if the change rate dA_{CC}/dt is a negative value. In other words, on the condition that the operation of releasing the accelerator pedal 28 is being carried out, if it is determined by the start-up difficulty determining means 82 that the vehicle is difficult to start, the output control means 84 executes an engine output control for reducing, than when not determined, the driving force output from the engine 12 depending on the operation amount of the accelerator pedal 28, i.e., the accelerator opening A_{cc}.

Preferably, if the vehicle body speed, i.e., the vehicle speed V detected by the vehicle body speed sensor 72 is less than a predefined specified speed V_{bo}, the output control means 84 executes a control for reducing the driving force output from the engine 12 depending on the operation amount of the accelerator pedal 28, i.e., the accelerator opening A_{cc}, whereas it does not execute such a control if the vehicle speed V is not less than the predefined specified speed V_{bo}. In other words, on the condition that the vehicle speed V is less than the predefined specified speed V_{bo}, if it is determined by the start-up difficulty determining means 82 that the vehicle is difficult to start, the output control means 84 executes an engine output control for reducing, than when not determined, the driving force output from the engine 12 depending on the operation amount of the accelerator pedal 28, i.e., the accelerator opening A_{cc}.

In the case where it is determined by the start-up difficulty determining means 82 that the vehicle is difficult to start, the vehicle 10 is considered to be on a so-called low µ road starting with the running road surface having a relatively low friction coefficient. In such a situation, a transmittable torque is small that can be transmitted from the wheels (driving wheels) of the vehicle 10 to the running road surface, with the result that the clutch pedal 32 has a reduced operable range, i.e., a reduced depressing operation range (stroke range) allowing a transmission of the driving force to the road surface. Thus, precise operations are required for both the operation of the clutch pedal 32 and the operation of the accelerator pedal 28, and hence the start-up performance is influenced by the driver's level of skill, which may possibly result in a trouble such as engine stall. Here, in the case where it is determined by the start-up difficulty determining means 82 that the vehicle is difficult to start, the output control means 84 executes an engine output control for reducing the driving force output from the engine 12 depending on the operation amount of the accelerator pedal 28, i.e., the accelerator opening A_{cc} than when not determined. Therefore the operable range of the clutch pedal 32 can be enlarged by reducing the output of the engine 12 under the situation such as starting on a low µ road where the vehicle is difficult to start, thereby achieving a preferred vehicle start without needing delicated operations for the clutch pedal and the accelerator. Control by the output control means 84 is terminated at the point where the vehicle body speed (vehicle speed) V detected by the vehicle body speed sensor 72 after the vehicle start reaches a predetermined value V_{b0} that is defined in advance, after which output control of the engine 12 depending on the accelerator opening A_{CC} is executed based on the relationship at ordinary time indicated by the solid line in Fig. 4.

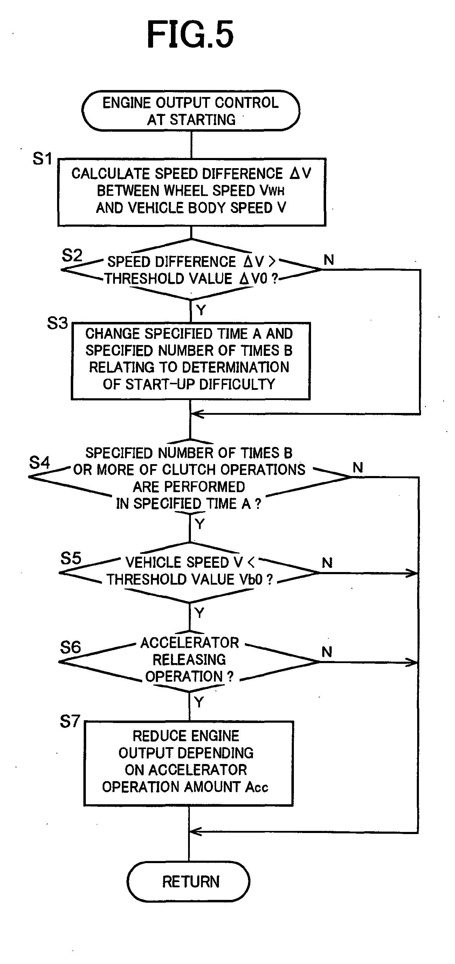

Fig. 5 is a flowchart explaining a main part of engine output control on starting by the electronic control device 18, which is repeatedly executed at a predetermined period.

First, at step (hereinafter, "step" will be left out) S1 corresponding to the action of the speed difference calculating means 80, calculation is made of a speed difference ΔV (=V_{WH}-V) between the wheel speed V_{WH} detected by the wheel speed sensor 70 and the vehicle body speed V detected by the vehicle body speed sensor 72. It is then determined at S2 whether the speed difference ΔV calculated at S1 is greater than a previously defined threshold value ΔV₀. If determination at S2 is negative, processes at S4 and the following steps are executed, whereas if determination at S2 is affirmative, the procedure goes to step S3 to change to smaller values the specified time A and the specified number of times B that are criteria for determining the start-up difficulty. It is then determined at S4 whether a specified number of times B or more of depressing operations or releasing operations of the clutch pedal 32 are detected by the clutch operation sensor 58 in the specified time A. If determination at S4 is negative, this routine is thereby brought to an end, whereas if determination at S4 is affirmative, the procedure goes to S5 to determine whether the vehicle body speed, i.e., vehicle speed V detected by the vehicle body speed sensor 72 is less than the predefined specified speed V_{b0}. If determination at S5 is negative, this routine is thereby brought to an end, whereas if determination at S5 is affirmative, the procedure goes to step S6 to determine whether an operation of releasing the accelerator pedal 28 is performed based on the accelerator opening A_{CC} detected by the accelerator operation amount sensor 26. If determination at S6 is negative, this routine is thereby brought to an end, whereas if determination at S6 is affirmative, it is determined at step S7 that the vehicle is difficult to start, to execute a control for reducing the driving force output from the engine 12 depending on the operation amount of the accelerator pedal 28, i.e., the accelerator opening A_{cc} than at ordinary time, i.e., than when it is not determined that the vehicle is difficult to start, to thereafter bring this routine to an end. In the above controls, S2 to S4 correspond to the actions of the start-up difficulty determining means 82 and steps S5 to S7 correspond to the actions of the output control means 84.

In this manner, this embodiment is provided with the start-up difficulty determining means 82 (S2 to S4) that determines whether the vehicle is difficult to start based on the frequency of driver's operations of the clutch 14 relating to the interruption or transmission and with the output control means 84 (S5 to S7) that, if it is determined by the start-up difficulty determining means 82 that the vehicle is difficult to start, reduces the driving force output from the engine 12 depending on the operation amount of the accelerator pedal 28, i.e., accelerator opening A_{cc} than when not determined, whereby a preferred vehicle start-up can be implemented without needing precise accelerator operations and clutch operations e.g., even when the running road surface has a relatively low friction coefficient with a small transmittable torque. That is, a control device of a vehicle engine can be provided that enhances the start-up performance in a situation where the vehicle is difficult to start.

Since the start-up difficulty determining means 82 determines that the vehicle is in a situation difficult to start if a specified number of times B or more of driver's operations of the clutch 14 relating to the interruption or transmission are carried out in the predefined specified time A, it can be determined in a practically useful manner whether the vehicle is difficult to start.

Since the speed difference calculating means 80 (S1) calculating a speed difference ΔV between the wheel speed V_{WH} and the vehicle body speed V is disposed so that if the difference ΔV between the wheel speed V_{WH} and the vehicle body speed V calculated by the speed difference calculating means 80 is not less than a predefined threshold value ΔV₀, the start-up difficulty determining means 82 changes at least one of the specified time A and the specified number of times B to a smaller value, it can be determined in a more practically useful manner whether the vehicle is difficult to start.

Since the output control means 84 executes the control for reducing a driving force output from the engine 12 depending on the operation amount of the accelerator pedal 28, i.e., accelerator opening A_{cc} when an operation of releasing the accelerator pedal 28 is being carried out whilst it does not execute the control when an operation of depressing the accelerator pedal 28 is being carried out, the acceleration characteristics can be restrained from varying in the process of depressing the accelerator pedal 28.

Although the preferred embodiment of the present invention has been hereinabove described in detail with reference to the drawings, the present invention is not limited thereto and may be embodied in another form.

For example, in the embodiment, description has been made of an example of application of the present invention to the vehicle 10 having the engine 12 in the form of a gasoline engine that generates a driving force by the combustion of gasoline injected into the cylinder, the present invention is not limited thereto and is advantageously applicable to a vehicle, etc., having a diesel engine that generates a driving force by the combustion of diesel oil injected into the cylinder. In such a form, the output control means 84 controls the driving force output from the diesel engine by exclusively controlling the amount of injection of fuel supplied to the diesel engine.

Although in the embodiment, the clutch 14 is a hydraulic clutch whose engaged state is hydraulically controlled, the present invention may be applied to a vehicle having an electromagnetic clutch or a magnetic powder clutch whose engaged state is electromagnetically controlled. That is, the present invention is widely applicable to a vehicle having a clutch that, by the driver's operation, interrupts or transmits a driving force output from the engine to a power transmission line between the engine and the transmission.

Although not exemplified one by one, the present invention may be carried out in variously modified or altered manners.

### NOMENCLATURE OF ELEMENTS

10: vehicle 12: engine 14: clutch 16: transmission 18: electronic control device (control device of a vehicle engine) 20: fuel injector 22: igniter 23: intake piping 24: throttle actuator 25: electronic throttle valve 26: accelerator operation amount sensor 28: accelerator pedal 30: shift lever 32: clutch pedal 34: input shaft 36: clutch output shaft 38: crankshaft 40: flywheel 42: clutch disc 44: clutch housing 46: pressure plate 48: diaphragm spring 50: clutch release cylinder 52: release fork 54: release sleeve 56: clutch master cylinder 58: clutch operation sensor 60: engine rotational speed sensor 62: cooling water temperature sensor 64: intake air amount sensor 66: intake air temperature sensor 68: throttle angle sensor 70: wheel speed sensor 72: vehicle body speed sensor 80: speed difference calculating means 82: start-up difficulty determining means 84: output control means

## Claims

1. A control device (18) of a vehicle engine (12) in a vehicle (10) having a clutch (14) that interrupts or transmits a driving force output from an engine by a driver's operation, and that is disposed in a power transmitting path between the engine and a transmission (16), the control device controlling the driving force output from the engine based on operation amount of an accelerator pedal (28), **characterized in that** the control device comprises:
a start-up difficulty determining means (82) that determines that the vehicle(10) is difficult to start when a specified number of times or more of driver's operations of the clutch relating to interruption or transmission are executed in a predefined specified time; and
an output control means (84) that, when it is determined by the start-up difficulty determining means that the vehicle is difficult to start, reduces the driving force output from the engine depending on the operation amount of the accelerator pedal compared to the case when it is not determined by the start-up difficulty determining means that the vehicle is difficult to start.

2. The control device (18) of a vehicle engine (12) of claim 1, comprising:
a speed difference calculating means (80) that calculates a difference between a wheel speed and a vehicle body speed, wherein
if the difference between the wheel speed and the vehicle body speed calculated by the speed difference calculating means is not less than a predefined threshold value, the start-up difficulty determining means (82) changes at least one of the specified time and the specified number of times to a smaller value.

3. The control device (18) of a vehicle engine (12) of claim 1 or 2, wherein the output control means (84) executes a control reducing the driving force output from the engine depending on the operation amount of the accelerator pedal when an operation of releasing the accelerator pedal (28) is being carried out, whereas the output control means does not execute the control when an operation of depressing the accelerator pedal is being carried out.

## Patentansprüche

1. Steuervorrichtung (18) einer Fahrzeugkraftmaschine (12) in einem Fahrzeug (10), das eine Kupplung (14) hat, die eine von einer Kraftmaschine ausgegebene Antriebskraft durch eine Fahrerbetätigung unterbricht oder überträgt, und die in einem Leistungsübertragungsweg zwischen der Kraftmaschine und einem Getriebe (16) angeordnet ist, wobei die Steuervorrichtung die von der Kraftmaschine ausgegebene Antriebskraft auf Grundlage eines Betätigungsbetrags eines Fahrpedals (28) steuert, **dadurch gekennzeichnet, dass** die Steuervorrichtung Folgendes aufweist:
ein Anlaufschwierigkeitsbestimmungsmittel (82), das bestimmt, dass das Fahrzeug (10) schwer zu starten ist, wenn eine bestimmte Anzahl von Malen oder mehr von Fahrerbetätigungen der Kupplung, die sich auf das Unterbrechen oder Übertragen beziehen, in einer vordefinierten, bestimmten Zeit ausgeführt werden, und
ein Ausgabesteuermittel (84), das dann, wenn durch das Anlaufschwierigkeitsbestimmungsmittel bestimmt wird, dass das Fahrzeug schwer zu starten ist, die von der Kraftmaschine ausgegebene Antriebskraft in Abhängigkeit des Betätigungsbetrags des Fahrpedals verglichen mit dem Fall verringert, wenn durch das Anlaufschwierigkeitsbestimmungsmittel nicht bestimmt wird, dass das Fahrzeug schwer zu starten ist.

2. Steuervorrichtung (18) einer Fahrzeugkraftmaschine (12) gemäß Anspruch 1, mit:
einem Geschwindigkeitsdifferenzberechnungsmittel (80), das eine Differenz zwischen einer Radgeschwindigkeit und einer Fahrzeugkörpergeschwindigkeit berechnet, wobei
falls die durch das Geschwindigkeitsdifferenzberechnungsmittel berechnete Differenz zwischen der Radgeschwindigkeit und der Fahrzeugkörpergeschwindigkeit nicht weniger als ein vordefinierter Schwellenwert ist, das Anlaufschwierigkeitsbestimmungsmittel (82) zumindest eines von der bestimmten Zeit und der bestimmten Anzahl von Malen auf einen kleineren Wert ändert.

3. Steuervorrichtung (18) einer Fahrzeugkraftmaschine (12) gemäß Anspruch 1 oder 2, wobei das Ausgabesteuermittel (84) eine Steuerung ausführt, die die von der Kraftmaschine ausgegebene Antriebskraft in Abhängigkeit des Betätigungsbetrags des Fahrpedals verringert, wenn eine Betätigung des Freigebens des Fahrpedals (28) ausgegeben wird, wohingegen das Ausgabesteuermittel die Steuerung nicht ausführt, wenn eine Betätigung des Niederdrückens des Fahrpedals ausgeführt wird.

## Revendications

1. Dispositif de commande (18) d'un moteur de véhicule (12) dans un véhicule (10) ayant un embrayage (14) qui interrompt ou transmet une force d'entraînement délivrée en sortie à partir d'un moteur par l'actionnement d'un conducteur, et qui est disposé dans un chemin de transmission de puissance entre le moteur et une transmission (16), le dispositif de commande commandant la force d'entraînement délivrée en sortie à partir du moteur sur la base d'une quantité d'actionnement d'une pédale d'accélérateur (28), **caractérisé en ce que** le dispositif de commande comprend :
un moyen de détermination de difficulté de démarrage (82) qui détermine que le démarrage du véhicule (10) est difficile lorsqu'un nombre spécifié de fois ou plus d'actionnements de l'embrayage par un conducteur relatifs à une interruption ou une transmission sont exécutés pendant une durée spécifiée prédéfinie ; et
un moyen de commande de sortie (84) qui, lorsqu'il est déterminé par le moyen de détermination de difficulté de démarrage que le démarrage du véhicule est difficile, réduit la force d'entraînement délivrée en sortie à partir du moteur en fonction de la quantité d'actionnement de la pédale d'accélérateur par rapport au cas où il n'est pas déterminé par le moyen de détermination de difficulté de démarrage que le démarrage du véhicule est difficile.

2. Dispositif de commande (18) d'un moteur de véhicule (12) de la revendication 1, comprenant :
un moyen de calcul de différence de vitesse (80) qui calcule une différence entre une vitesse de roue et une vitesse de carrosserie de véhicule, dans lequel
si la différence entre la vitesse de roue et la vitesse de carrosserie du véhicule calculée par le moyen de calcul de différence de vitesse n'est pas inférieure à une valeur seuil prédéfinie, le moyen de détermination de difficulté de démarrage (82) modifie au moins l'un(e) de la durée spécifiée et du nombre de fois spécifié en une valeur plus petite.

3. Dispositif de commande (18) d'un moteur de véhicule (12) de la revendication 1 ou 2, dans lequel le moyen de commande de sortie (84) exécute une commande réduisant la force d'entraînement délivrée en sortie à partir du moteur en fonction de la quantité d'actionnement de la pédale d'accélérateur lorsqu'une opération de relâchement de la pédale d'accélérateur (28) est effectuée, alors que le moyen de commande de sortie n'exécute pas la commande lorsqu'une opération d'appui sur la pédale d'accélérateur est effectuée.
